Europäisches Patentamt

European Patent Office

Office européen des brevets

(11) EP 1 447 124 A1

(19)

(12) **EUROPEAN PATENT APPLICATION**

(43) Date of publication:
18.08.2004 Bulletin 2004/34

(51) Int Cl.[7]: **B01D 53/86**, B01J 23/745,
B01J 35/10, C01B 17/04

(21) Application number: 03075345.3

(22) Date of filing: 04.02.2003

(84) Designated Contracting States:
**AT BE BG CH CY CZ DE DK EE ES FI FR GB GR
HU IE IT LI LU MC NL PT SE SI SK TR**
Designated Extension States:
**AL LT LV MK RO**

(71) Applicant: **GASTEC N.V.**
**NL-7327 AC Apeldoorn (NL)**

(72) Inventors:
• **van Nisselrooij, Petrus Franciscus Maria
Theresia**
**6511 SV Nijmegen (NL)**

• **van Yperen, Renee**
**6961PL Eerbeek (NL)**

(74) Representative:
**Prins, Adrianus Willem, Mr. Ir. et al
Vereenigde,
Nieuwe Parklaan 97
2587 BN Den Haag (NL)**

(54) **Supported catalyst system for removing sulfur compounds from gases**

(57)     The present invention relates to a supported catalyst system for the removal of sulfur compounds, such as $H_2S$ comprising a metal compound on a support material, wherein in said support material, the sum of the pore volume present in micro-pores and in mesopores is less than 0.20 ml per gram of catalyst, and wherein the pore volume V-Hg, as measured by mercury intrusion porosimetry, is at least 0.30 ml/g.

The invention further relates to processes for desulfurization of gases containing sulfur compounds, such as $H_2S$ in which this catalyst system is used.

EP 1 447 124 A1

**Description**

The invention is in the field of the removal of sulfur compounds. More in particular, the present invention is directed to supported catalyst systems, as well as to the use of these catalyst systems in the removal of sulfur compounds, such as $H_2S$ and to processes for de-sulfurization of gases containing sulfur compounds, such as $H_2S$.

The chemical and physical de-sulfurization technologies nowadays available are divided in two main groups: liquid and dry-bed sorption processes. The processes are extensively described in, *inter alia* A. Kohl, R. Nielsen, Gas Purification, 5th edition, Gulf Publishing Company, Houston, (1997).

Dry-bed sorption processes are commonly applied for removal of relatively small quantities of sulfur compounds, such as $H_2S$, *i.e.,* up to 10 to 20 tons of sulfur equivalents per day. Since most of the time the sulfur compounds to be removed contain or are $H_2S$, this is the market of the so-called $H_2S$ scavenging processes. The applications include purification of natural gas, landfill gas, biomass digester gas and a variety of industrial (off) gases.

$H_2S$ scavenging operations are of growing importance to natural gas producers, as production is becoming increasingly sour. The exploration of renewable energy sources and increasingly stringent legal emission requirements also add to a growing need for low temperature desulfurization processes, such as $H_2S$ scavenging processes.

Hydrogen sulfide scavengers have been used for many years. One example is iron sponge. Another well-known example is caustic soda, which covers a large share of the market. Nevertheless, the technology to cope with $H_2S$ at a relatively low temperature, in particular when only small quantities of $H_2S$ are to be removed, is still suffering from economic and/or environmental problems.

Liquid sorption comprises washing of the hydrogen sulfide containing gas with a basic solution of, for instance, caustic soda, methanol or alkanolamines.

The non-regenerable solvent types have to be disposed of after the sorption process, which is a major drawback in this age of environmental awareness. Another disadvantage of the "once through" principle is the high and economically unattractive consumption of chemicals.

Alternatively, regenerable solvents may be used. The regenerability of, for example, alkanolamines allows the solvent to be reused, thus reducing the chemical costs and waste disposal problems. However, the regeneration process generates a stream of concentrated $H_2S$, which has to be processed further. This is usually done in a Claus plant, which converts the extremely hazardous hydrogen sulfide into safe to handle elemental sulfur, which can be sold to the sulfur processing industry.

The amine-Claus-technology is widely used. However, the capital cost involved in an additional sulfur recovery plant puts a lower limit on the sulfur production rate. In general, for the technology to be economical, the sulfur production should be more than 20 tons per day.

A common problem of basic solvents is the interfering absorption of other components in the gas, in particular $CO_2$ which reduces the $H_2S$ uptake considerably. Another disadvantage is that wash towers have to be designed to cope with the peak values in the $H_2S$ content of the feed gas. As a result, the installations are operating at almost constant turn down, when purifying gases with a widely varying $H_2S$ content. This is often the case with, for instance, small industrial off gas flows and gases from bio mass conversion processes.

There are several processes on the market, which extend the economic working range of regenerable wash processes to less than 20 tons of sulfur per day, by avoiding a separate sulfur recovery plant. Among these are the well-known STRETFORD™, SULFEROX™ and LO-CAT™ processes, based on $H_2S$ absorption in alkaline aqueous solutions of multivalent V or chelated Fe catalysts. The absorbent is regenerated by oxidation, in which process the $H_2S$ absorbed is converted to elemental sulfur.

The complexity of these processes limits the economical operating range to sulfur production rates of *ca.* 10 to 30 tons per day. A frequently occurring problem is catalyst degradation and the consumption of chemicals connected to it.

Dry-bed sorption processes are easier to operate and cope more economically with varying $H_2S$ concentrations in the feed gas, compared to liquid sorption processes. There is no need for an over-designed installation. Dry-bed sorption is therefore particularly interesting for the scavenging market.

The fact that dry-bed sorption is a batch process is another reason why it fits in this particular market niche. A charged absorber has to be taken from the process gas line to be replenished with a fresh absorbent, either by replacement with new material or by regeneration of the sulfur-laden absorbent. The process economics benefits therefore strongly from long absorption times and low sulfur production rates, in particular less than 10 to 20 tons per day.

Well-known dry-bed scavengers are activated carbon and certain types of zeolite, in which $H_2S$ is adsorbed on the absorbent surface and/or retained in the zeolite cages. These materials are commonly used in non-regenerative applications, having the same economical and environmental disadvantages as the above mentioned liquid equivalents. Moreover, they suffer from a limited $H_2S$ uptake capacity, due to interfering absorption of other components in the feed gas, *e.g.* $CO_2$, hydrocarbons and water vapor.

Metal oxides form a second group of low temperature dry bed scavengers. They react with $H_2S$ to form metal

sulfides. To be effective, in terms of $H_2S$ uptake activity and capacity, the metal oxide surface area accessible to $H_2S$ should be large. Therefore, these absorbents are highly porous materials with high metal oxide content, typically over 50 wt%. The material may be the pure metal oxide itself, or the oxide may be present on an inert support material. A wide variety of metal oxides suites the purpose, *inter alia* oxides of Ni, Fe, Co, Cu, Cr, Mo, W, V, Zn. Single oxides as well as mixtures of different metal oxides are described in the patent literature.

The standard commercial products within this group are zinc oxide and iron oxide. In non-regenerative use they present the problems mentioned above. In principle, zinc oxide can be regenerated in oxygen containing gas at elevated temperatures. The $SO_2$ evolved, however, presents a disposal problem and the regenerability is hampered by degradation of the absorbent.

Hydrated iron oxide is in use as a scavenger for well over a century. Hydrogen sulfide in coal gas from nineteenth century town gas plants, for example, was already removed by reaction with moist iron oxide at a temperature below 100 °C.

The iron oxide absorbents currently available have a high absorption capacity and $H_2S$ removal activity in humid (or humidified) process gases. Regeneration below 150 °C in oxygen containing gas is possible. However, after regeneration the absorbent has only 60% of its original capacity left.

The principle of $H_2S$ absorption by iron oxide may be illustrated by (true stoichiometry may differ):

$$Fe_2O_3 + 3H_2S \rightarrow Fe_2S_3 + 3H_2O \tag{1}$$

Regeneration of the charged absorbent with oxygen proceeds according to:

$$Fe_2S_3 + 3/2O_2 \rightarrow Fe_2O_3 + 3/nS_n \tag{2}$$

As the oxidation is carried out below the sulfur dew point, the sulfur is retained in the catalyst, thus hampering the $H_2S$ uptake in the subsequent absorption cycle.

A disadvantage of this regeneration method, besides the limited recovery of $H_2S$ uptake capacity, is the fact that the oxygen flow has to be controlled very carefully. Excess oxygen leads to combustion of iron sulfide to iron oxide and $SO_2$ formation. The heat evolved accelerates the combustion reaction, resulting in ignition and destruction of the absorbent and the evolution of large quantities of $SO_2$, which is not easily disposed of.

A next step is to add some oxygen to the absorption feed gas and to carry out reaction (1) and (2) simultaneously, at temperatures at which sulfur is retained in the catalyst. Indeed, it has been a long time practice to add a small amount of oxygen - if not already present in the feed gas - to enhance the $H_2S$ removal capacity of iron oxide absorbents.

The overall reaction that results from (1) and (2) is:

$$H_2S + \tfrac{1}{2}O_2 \rightarrow 1/n\ S_{n\text{-retained in the catalyst}} + H_2O \tag{3}$$

As $Fe_2O_3$ drops out of the equation, it now acts as a catalyst, together with $Fe_2S_3$. $Fe_2O_3$ only functions as an absorbent as far as it needs to take up $H_2S$ to reach an equilibrium state with $Fe_2S_3$ in the reduction-oxidation cycle, which switches back and forth between reaction (1) and (2).

Without wishing to be bound by theory, the present inventors believe that the actual catalytically active species in the process, once stabilized, is probably not a mixture of $Fe_2O_3$ and $Fe_2S_3$, but a non stoichiometric iron oxy-sulfide $FeS_xO_y$ in the surface of iron oxide and/or iron sulfide particles.

$H_2S$ removal by selective oxidation to sulfur, according to reaction (3), is not restricted to the iron oxide/sulfide system. Several other metals, among them Cu, Mn, Cr, Ni, W, Mo, Co and V, are known to catalyze the same reaction. Other suitable materials are activated alumina, titania and activated carbon.

Particularly effective is regenerative catalytic selective oxidation of $H_2S$ with free oxygen to sub dew point sulfur, which is retained in the pores of the catalyst, at temperatures between ambient and 180 °C, preferably between ambient and 100 °C. The sulfur is removed from the charged absorbent by evaporation in non oxidizing gas, at temperatures between 200 °C and 500 °C.

Dry bed sorption processes represent an attractive technology for $H_2S$ removal, particularly from gas streams with a low sulfur production rate, such as landfill gas, bio-mass digester gas and industrial waste gases.

For de-sulfurization below 100 °C there are two catalysts in standard commercial use: hydrated iron oxide/sulfide and activated carbon. Activated carbon may be used as such or in combination with a promoter, e.g. potassium iodide.

In principle, the catalysts can be regenerated by vaporization of the sulfur retained in the catalyst and removal of the sulfur from the catalyst bed with an oxygen free sweeping gas, at a temperature between 200 to 500 °C.

Activated carbon suffers from co-absorption of other feed gas components than $H_2S$, thus reducing the $H_2S$ and sulfur uptake capacity. Moreover, sulfuric acid is formed as an oxidation byproduct, which has to be removed or reduced before sulfur evaporation. US-A-5 256 384, for instance, describes $H_2S$ oxidation, in an oxygen containing gas, at 50 to 180 °C over activated carbon, in which the regeneration procedure consists of reduction of the sulfuric acid by $H_2$ or $H_2S$, at 100 to 180 °C, before evaporation of the absorbed sulfur at 200 °C to 400 °C.

An important additional disadvantage of activated carbon is the rapid mechanical degradation in successive absorption regeneration cycles, as a result of which the product has never gained a significant commercial position in regenerative $H_2S$ removal.

Several patent documents describe oxidative $H_2S$ removal over supported metal oxides, sulfides and/or oxy-sulfides and regeneration by sulfur evaporation.

Several patent documents in the field of sub dew point $H_2S$ oxidation are directed towards de-sulfurization of Claus off gas. Claus off gas contains $H_2S$, $SO_2$ COS, $CS_2$ and a small amount of sulfur (Sx). As these types of feed gases contain more than 30 vol. % of water vapor, it is advantageous to operate above the water dew point, *i.e.*, between 80 °C and 180 °C. Feed gases such as bio-mass digester gas, industrial waste gases, etc., are typically at temperatures between ambient and 100 °C. Energetically, it is advantageous to remove $H_2S$ in the same temperature range.

Metal oxides / sulfides are perfectly capable of doing the job, but kinetic limitations have a considerable effect on the catalytic activity at the lower temperature end of sub sulfur dew point de-sulfurization. Therefore, measures have to be taken to keep up an acceptable reaction rate.

A way to enhance catalytic activity is to apply the active component in very finely divided form to a catalyst support material, to maximize the catalyst surface area exposed to the reacting gas phase molecules. Catalysts with highly dispersed metal oxides, however, run a very high risk of creating locally high activities, in such a way that $H_2S$ is no longer selectively oxidized to sulfur but completely converted into $SO_2$.

It is possible to convert $H_2S$ selectively to elemental sulfur at low temperatures, using catalysts having highly dispersed metal oxides /sulfides on a carrier, without formation of $SO_2$. Such materials have been described in EP-A-0 324 091.

Catalytically active materials described in the patent literature are oxides and/or sulfides of Ni, Co, Fe, Cu, Ag, Mn, Mo, Cr, Ti, W, V, on support materials such as bauxite, activated and/or stabilized alumina, titania, zirconia, zeolites, silica/alumina mixtures, silica/titania mixtures, silica, activated carbon, silicon carbide. These known catalytically active materials, optionally in combination with these known support materials, may be used in accordance with the present invention.

According to US-A-6 083 471 and EP-A-0 324 091 the metal sulfide is the predominant catalytically active species. US-A-6 083 471 and US-A-6 235 259 describe an elaborate pre-sulfiding procedure using sulfur or $H_2S$ containing inert gas, at 250 °C to 400 °C. US-A-6 235 259 states that metal oxy-sulfides are the actual active species and prescribes a second activation step in which the pre-sulfided catalyst is partially re-oxidized in inert gas containing a small amount of free oxygen. A drawback of these procedures is that they require additional chemicals and carefully controlled procedures. In practice there is usually no sulfur available for pre-sulfiding at the start up of a new plant. Pre-sulfiding in $H_2S$ is also a problem, particularly in small plants, which are often at remote locations, for instance, landfill and bio-mass digester sites and near a diversity of factories and installations producing small sulfur containing waste gas streams. Chemicals like $H_2S$ are not readily available there, unless the gas to be purified can be used for the purpose. Often this is not the case, because, for instance, gas from landfills and waste gases very often contain oxygen.

In general, any use of additional and hazardous chemicals is undesirable in processes which operate outside a chemical industrial environment, without highly trained professionals to control the procedures. Moreover, any additional process step is unattractive because of the operational costs involved.

A potential problem of the selective oxidation process is that some catalytically inactive metal sulfates are formed in the absorption stage. If the metal sulfate is not reduced after every absorption run, the catalyst will deactivate in successive absorption / regeneration cycles.

Several patent documents, such as GB-A 1 504 059 and US-A-5 607 657 try to cope with the deactivation by sulfation. In the prior art, the deactivation by catalyst sulfation is counteracted by reduction to metal sulfides with $H_2S$, $H_2$ or CO, which is added to the regeneration gas. This procedure, however, has the same disadvantages as mentioned above in connection to the pre-sulfiding of the fresh metal oxide catalyst.

Another potential problem of $H_2S$ removal by oxidation is the exothermicity of the reaction. This prohibits the removal of high $H_2S$ concentrations in a single absorption step in a (near) adiabatic reactor. The oxidation of each vol. % of $H_2S$ to sulfur is associated with an adiabatic temperature rise of 60 °C to 75 °C, depending on the feed gas composition. If the temperature rises to a level were the catalyst starts to catalyze the oxidation of sulfur to $SO_2$ an additional 60 °C to 75 °C adiabatic temperature rise is generated for every vol. % of $SO_2$ produced. In the worst case, the result is a temperature runaway, igniting the metal sulfide and leading to destruction of the absorbent.

The problem of possible runaways is dealt with in several patent documents, such as US-A 5 607 657 and DE-A 42 06 104. In the prior art the temperature control problems are solved by cooling through indirect heat exchange, either by cooling coils in the absorber, or by inter-cooling between separate absorption stages. Indirect heat exchangers are very expensive and unattractive solutions, particularly for small plants. Moreover, they cannot completely prevent a temperature runaway if the locally evolved heat cannot be removed quickly enough.

To avoid runaways, US-A-6 017 507 proposes to add under-stoichiometric oxygen in successive oxidation stages. In that case, the temperature rise is limited by the amount of oxygen available. After each stage the process gas is cooled indirectly. This is a very expensive solution. Moreover, it is very difficult to adjust the cooling to the heat generated in each oxidation stage, particularly in the case of strongly fluctuating $H_2S$ concentrations in the feed gas. Furthermore, some sulfur compounds containing gases already contain excess oxygen to begin with.

A more rigorous solution is the direct cooling of the absorbent by liquid water, in a trickle flow reactor, as described in US-A-6 235 259. This is highly detrimental to the mechanical strength of the catalyst. In addition, the metal sulfates that are formed in the absorption stage are dissolved in the water. As a result the catalytically active material is slowly washed from the catalyst bed.

It is an object of the present invention to provide a supported catalyst system, which solves one or more of the above-mentioned problems associated with the prior art. A further object is to provide a process for the removal of sulfur compounds, such as $H_2S$, which solves at least in part the above-mentioned prior art problems. In particular the present invention is aimed at providing a regenerative process for quantitative removal (up to vol.% levels) of sulfur compounds, such as $H_2S$ from gases by catalytic selective oxidation of sulfur compounds to elemental sulfur at a moderate temperature (typically between ambient and 80 °C). Such a process should preferably:

- allow for stable operation with high and/or varying sulfur compounds feed levels - particularly with respect to the absorbent temperature - using a minimum of indirect heat exchangers and process control equipment in order to minimize costs;
- not require additional chemicals to regenerate the catalyst or special pre-sulfiding procedures; and/or
- produce a minimum amount of chemical waste, by extended regenerability (25 absorption / regeneration cycles or more) without catalyst degradation.

The present invention should in particular find use in the so-called $H_2S$ scavenger processes, without being limited to $H_2S$.

It has been found that these and other objects can be solved by a catalyst system according to claim 1.

It has been found that in particular the pore structure of the catalyst is crucial in obtaining a material with the desired properties. The most important characteristic is that the specific pore volume of the catalyst system in the micropore and mesopore range is very low. According to the present invention the sum of the pore volume present in micro-pores (*i.e.*, pores with diameters less than 4 nm) and in mesopores (*i.e.*, pores with diameters between 4 and 100 nm) is less than 0.20 ml per gram of catalyst, preferably less than 0.15 ml/g and more preferably less than 0.10 ml/g. This sum of micropore and mesopore volumes is also referred to as the so-called $N_2$ pore volume, V-$N_2$, as measured by nitrogen absorption. The lower limit of V-$N_2$ is, according to the present invention, in principle zero, but in practical catalyst systems it is usually larger than 0.01 ml/g.

It was found that catalyst systems with a micropore and mesopore volume (V-$N_2$) of 0.20 ml/g or more cannot easily disperse the heat evolved in the oxidation of $H_2S$ and tend to convert $H_2S$ quantitatively to $SO_2$ instead of sulfur, in particular with relatively high Fe loadings of the support.

In general, a high total pore volume is advantageous for a high sulfur uptake capacity.

According to the present invention, the pore volume V-Hg, representing pore diameters ranging from 8 nm to *ca.* 20000 nm (*i.e.*, sum of macropores and mesopores), as measured by mercury intrusion, is at least 0.30 ml/g, preferably more than 0.40 ml/g and more preferably more than 0.45 ml/g. Typically, the maximum of V-Hg of the catalyst system according to the present invention is about 1 ml/g, since for larger values it appeared to be very difficult to maintain the above-mentioned requirement for the maximum of V-$N_2$, in particular the contribution of mesopores will become considerable.

Furthermore, it has been found that the sulfur generated in the absorption stage can effectively be used as a reducing agent for the conversion and regeneration of catalytically inactive metal sulfates to active metal sulfides. Surprisingly, the reduction process can be carried out at temperatures as low as 200 °C to 350 °C. As sulfation is a determining factor in the catalyst de-activation and the regenerability of the process, the reduction with "process-own" sulfur provides a cost effective and simple way to obtain the required extended regenerability.

Results published for iron oxide based catalysts in the low temperature selective oxidation of $H_2S$ to sulfur

show that for $H_2S$ removal to less than 1 ppmv the relative process gas humidity should be above 80%, in order to keep the iron oxide and/or sulfide in the hydrated form. Below 80 % the $H_2S$ conversion starts to decline (see: P.F.M. T. van Nisselrooy, "The Selox Process. Low temperature removal of $H_2S$ from gases", paper presented at the NIRIA seminar "$H_2S$ or $SO_2$ removal", November 6, 1997, Utrecht (NL)).

Since $H_2S$ oxidation is strongly exothermic, the present inventors believe that the relative gas humidity drops fast due to the temperature rise associated with the progressing $H_2S$ conversion, in particular with high $H_2S$ feed concentrations. As a result, the catalyst de-hydrates, its activity becomes insufficient and, ultimately, the $H_2S$ conversion comes to a halt, unless a temperature level is generated by the oxidation reaction at which non-selective oxidation of $H_2S$ to $SO_2$ starts to occur over the de-hydrated catalyst.

It has been found that according to the present invention it is possible to process high levels of $H_2S$, and/or widely varying $H_2S$ feed gas concentrations, in such a way that the process is self controlling, without the danger of temperature runaways, $SO_2$ production and absorbent destruction by ignition. Without wishing to be bound by theory, it is believed that this effect is the result of the fact that the oxidation activity of certain catalysts is almost completely dependent on the relative humidity of the process gas. Using this principle, according to the present invention the process temperature can easily be controlled without expensive heat exchange equipment and/or internally cooled absorbers.

The fresh catalyst system of the present invention comprises a metal compound (in particular a metal oxide, sulfide and/or metal oxysulfide) which is present on a support material in dispersed form. The metal can be an element or a combination of elements taken from the group Ni, Co, Fe, Cu, Ag, Mn, Mo, Cr, Ti, W, V, precious metals (such as Au, Ag, Pt, etc.), etc. The important factor in this respect is that the properties of the corresponding metal oxides and metal sulfides, and the way and quantity in which they are applied to the support, and the structural characteristics of the catalyst, are such that the resulting $H_2S$ oxidation activity of the catalyst is strongly dependent on the state of hydration of the active species and, in this connection, on the relative humidity of the process gas.

The support may be made of refractory materials, or combinations thereof. Examples are natural or synthetic aluminas, natural or synthetic silica-aluminas, silica, titania, zirconia, carbides, etc. The support, shaped in the desired form (*e.g.*, extrudates or pellets of various shapes and sizes or monoliths), should have sufficient strength and resistance toward thermal stresses, to avoid mechanical degradation in successive absorption / regeneration cycles. Moreover, the support surface should be inert in the process gases. For instance, the support material should not be prone to sulfation.

The catalyst for the process according to the invention is catalytically active for the selective oxidation of sulfur compounds, such as $H_2S$ to sulfur at temperatures ranging from just above the water freezing point to 100 °C, with feed gases having a relative humidity of up to 100%, more in particular ranging from 40 % to 99%, preferably from 60 % to 97%, more preferably from 80 to 95%.

Below a relative humidity of 80%, and in particular below 60%, the activity drops rapidly to almost zero. A relative humidity above 95% is beneficial for the catalyst activity, but undesirable, because of the risk of water condensation in the catalyst pores.

Practical relative humidity values depend *inter alia* on the intended use for the desulfurized gas. An upgrade of landfill gas or biomass digester gas, for instance, to natural gas distribution quality (< 3 ppmv $H_2S$) requires generally 80-95 % relative humidity for an effective desulfurization. If the gases are used as a fuel for prime movers, like gas engines, the treated gas is allowed to have still rather high levels of sulfur compounds, such as $H_2S$. Only a small amount of sulfur compounds has to be removed in the desulfurization process and the feed gas may have a relative humidity well below 80% or even well below 60%.

A suitable catalyst consists of iron oxide on a silica support. The amount of iron is 0.1 % to 20 %, preferably 2 % to 10 % by weight, based on the weight of the catalyst. For metals other than iron, similar amounts will apply. The specific surface area, as determined by the BET multipoint nitrogen absorption method is within the range of 2 to 200 $m^2/g$, preferably 5 to 100 $m^2/g$, more preferably 10 to 60 $m^2/g$.

The methods to measure BET surface areas, as well as the methods for measuring $N_2$ and Hg pore volumes and pore distributions are described *inter alia* in: E. Robens *et al.:* "Standardization of sorption measurements and reference materials for dispersed and porous solids", Ch. 3 of: A. Dabrowski (Ed.): "Adsorption and its Application in Industry and Environmental Protection. Vol. 1: Application in Industry", Studies in surface science and catalysis, Vol. 120A. Amsterdam (1999) Elsevier.

It has been found that deep sulfurization to less than 1 ppmv $H_2S$ and a simultaneous high sulfur loading can very suitably be achieved with macroporous catalysts, in particular materials for which the fraction $V$-$N_2$/($V$-$Hg$ + $V$-$N_2$) is less that 0.30, preferably less than 0.20 and more preferably less than 0.15, and which have an average pore diameter, as measured by mercury intrusion, of at least 80 nm, preferably more than 100 nm, and particularly more than 120 nm.

The catalyst may be prepared by any known method. As an example, one may impregnate pre-shaped support bodies by incipient wetness with a metal complex or salt, dry the impregnated support at 100 - 120 °C and calcine the resulting material at 400 - 500°C.

The catalyst particles may be in the shape of cylindrical extrusions, tri- and quadrulobes, spheres, rings, etc.; whatever may be appropriate for a given application. Also suitable are catalyst coatings on pre-shaped substrates, such as ceramic or metal honeycomb structures, sintered metal, heat exchanger tubes or plates, etc. The use of honeycombs is advantageous in case of pressure drop limitations. Coatings on a metal substrate with a high thermal conductivity are useful to disperse the reaction heat more effectively, increasing the catalysts' sulfur uptake per unit volume.

The catalyst coating may be applied to the substrate by any known method.

For sufficient catalytic activity the metal oxide should be present in high dispersion on the support. More importantly, the active species should have a high dispersion, *i.e.* a small average particle size, to ensure a good and stabilizing interaction with the support, in order to survive numerous absorption / regeneration cycles without deactivation by sintering of the active material.

Good results have been obtained with catalyst systems wherein the metal oxide was present in particles having a diameter of 400 Å or less, preferably 200 Å or less, more preferably $\leq$ 100 Å.

The metal oxide dispersion can be determined using techniques known to the skilled person, in particular techniques, such as electron microscopy and X-ray diffraction. Once it has been ascertained that a material has a suitable metal oxide dispersion, it may be desirable to record its reduction behavior in a thermo gravimetric analysis (TGA), as is illustrated for iron oxide/silica in the paragraphs below, since TGA measurements are less elaborate than techniques such as the ones mentioned above.

Iron oxide on silica is a particularly suitable material in this respect. At the interface between the iron oxide and the silica support $FeSiO_4$ is formed, which acts as a stabilizing layer between the support and the active particles, particularly for the smaller, highly dispersed particles.

It can easily be checked if a catalyst system according to the present invention, *e.g.* an iron oxide on silica catalyst, has sufficient dispersion and interaction with the support by means of thermo-gravimetric analysis (TGA). A sample of a fresh catalyst is crushed to a particle size between approximately 0.5 and 1 mm. 50 to 100 mg of the crushed sample is placed a quartz crucible. The crucible is suspended in an oven tube. The tube is flushed with a mixture of 20 vol. % $O_2$ in $N_2$. The sample is heated to 250 °C in this mixture, at a rate of 10 °C/min. After 1 hour at 250 °C, to remove water from the sample, the sample is cooled to 35 °C. The system is than flushed for one hour with nitrogen, after which the gas supply is switched to 20 vol. % $H_2$ in $N_2$. In this mixture the sample is heated from 35 °C to 950 °C, at a rate of 5 °C/min, and the sample weight is monitored. Highly dispersed iron oxide particles, with strong support interaction, are reduced at temperatures between 250 °C and 450 °C, and between 600 °C and 950 °C. Weight loss between 450 °C and 600 °C is associated with reduction of larger, sinter sensitive, iron oxide particles to iron metal. For metals other than iron and carriers other than silica the desired degree of metal dispersion can be assessed by the above-mentioned known techniques, such as electron microscopy and X-ray diffraction and subsequently linked to their own TGA temperature windows.

For catalyst according to the invention having less than 10 % by weight metal (*e.g.* Fe) the weight loss between 450 °C and 600 °C in the TGA as described is less than 25% and preferably less than 20% of the total weight loss between 250 °C and 950 °C. For catalysts having 10% to 20% Fe by weight the weight loss is less than 35% and preferably less than 25% of the total weight loss between 450 °C and 600 °C. For metals other than iron similar results will be obtained.

In its most basic configuration the process consists, if required, of a process gas make up section and one adiabatic absorber filled with a catalyst according to the invention. The gas containing sulfur compounds, such as $H_2S$ is passed to a make up section. First, if the feed gas is too low in oxygen, it is mixed with a gas containing free oxygen. This may be pure oxygen, air, or any other mixture of free oxygen and inert gas.

The molar oxygen to sulfur compounds will further be described as oxygen to hydrogen sulfide ratio. The molar $O_2/H_2S$ ratio in the resulting mixture may vary within a wide range. In general, the lower limit is determined by the content of sulfur compounds allowed in the product gas. Theoretically, the ratio could be as low as 0.01, without any effect on the process chemistry. The upper value is determined by mainly two factors: 1) the degree to which the sulfur compounds containing gas can be diluted with excess oxygen containing gas without serious consequences for the plant size and the associated capital costs, and 2) the tendency of the catalyst, once it is in (partially) sulfided for, to form inactive sulfates through slow oxidation of the metal (oxy-)sulfide.

$O_2/H_2S$ ratios as high as 500 may occur. A more suitable range is 0.01 to 20. Preferred is 0.5 to 10, more preferred 1 to 5.

Further, in the make up section, the relative humidity of the sulfur compounds and free oxygen containing gas is adjusted, e.g. by steam injection or temperature control of the gas stream. Another possibility of adjusting the relative humidity is by feeding the gas stream to a water wash tower. The tower consists of a structured packing, which is sprayed with water, coming from a spray nozzle above the packing. The water trickling through the structured packing is collected in a reservoir in the bottom of the wash tower. The water is recycled from the reservoir to the spray nozzle.

The $H_2S$-$O_2$ containing feed gas enters the tower at the bottom (above the water reservoir) and is contacted with the downward trickling water in the structured packing in counter current. The water saturated gas leaves the tower at the top.

The water reservoir contains a cooling and/or heating element. The water temperature in the reservoir is adjusted in such a way that the gas leaving the wash tower is at the desired temperature. The reservoir is supplied with a water drain and a water supply, to compensate for water condensation from the process gas, or water uptake by the gas.

The water saturated gas is passed to the absorber through a line supplied with a heat tracing. The tracing heats up the process gas to a temperature slightly above the temperature at the outlet of the wash tower. In this way the absorber is supplied with a gas having the desired relative humidity. As an indication, the relative humidity may be 60% to 80%, for very low sulfur compounds feed levels (in the order of $10^1$ ppmv), up to 80% to 95% for higher sulfur compounds levels if very low levels of sulfur compounds in the product gas are required.

If no high conversion rates are required, lower relative humidities can be chosen depending on the concentration of sulfur compounds in the gas stream to be desulfurized and the maximum allowed concentration in the product gas, *e.g.* for prime movers.

For some applications, e.g. those characterized by small flows and/or low daily sulfur production rates, the gas conditioning can be skipped if enough oxygen and water vapor is present. This is typically the case for off gases like biogas off gas streams and other waste gases.

The absorber is constructed in such a way that the temperature at every point in the absorbent bed is at least equal to the feed gas temperature. This is the case, for instance, with well insulated adiabatic absorbers. Particularly suited for the purpose are double walled absorbers, with a fluid, having at least the feed gas temperature, flowing between the walls.

In the absorber the sulfur compounds, such as $H_2S$ are converted with the oxygen present in the gas to sulfur. The sulfur deposits in the absorbent pores. Starting with a fresh absorbent, the $H_2S$ is also taken up by the iron oxide in the form of iron sulfide. If required, some or all sulfur compounds can first be converted to $H_2S$ prior to the selective oxidation to elemental sulfur.

The gas hourly space velocities employed in the process may vary over a wide range, from the order of $10^0$ $Nm^3$ gas/$m^3$ catalyst/h up to 5000 $Nm^3$ gas/$m^3$ catalyst/h, preferably up to 1000 $Nm^3$ gas/$m^3$ catalyst/h and more preferably up to 500 $Nm^3$ gas/$m^3$ catalyst/h, depending on the product gas specifications and the desired standing time.

It has been found that under the more preferred absorption process conditions, *i.e.*, at space velocities $\leq 500$ $Nm^3$ gas/$m^3$ catalyst/h, it is not necessary to pre-sulfide the catalyst for maximum absorption capacity and removal of sulfur compounds, when using a fresh catalyst (iron oxide) as a starting material.

With progressive sulfur loading of the catalyst sulfur compounds like $H_2S$ starts to break through and the catalyst has to be regenerated. If the catalyst is repeatedly regenerated at elevated temperatures, say at 200 to 350 °C, by evaporation of sulfur, which is swept from the catalyst using an inert gas at a high space velocity to remove the sulfur effectively, it appears that the catalyst slowly looses sulfur uptake capacity in successive absorption - regeneration cycles, due to formation of inactive iron sulfate.

As described before, this is a known phenomenon, which can be counteracted by addition of reducing agents, such as hydrogen, to the sweeping gas. The disadvantage is that an extra reducing agent has to be supplied.

It has now been found that, by proper process procedures, the sulfur formed in the absorption step can be used as a reducing agent to convert sulfates to sulfides.

Pre-sulfiding of metal oxide catalysts using sulfur is a known technique. US-A-6 235 259 and US-A-6 083 471 describe pre-sulfiding of metal oxides, in particular nickel oxide, with sulfur at 250 °C to 400 °C.

Pre-sulfiding of hydro-treating catalysts, based on metal oxides, by impregnation with sulfur or sulfur derivates, followed by heating of the catalysts in a reducing gas is also well documented in the patent literature. US-A-5 786 293 discloses a method in which hydro-treating catalysts, in metal oxide form, are impregnated with an inorganic polysulfide solution. The polysulfide laden material is treated in inert gas at preferably 230 °C to 350 °C. It is claimed that at least part of the metal oxide is converted to metal sulfide in the process, sufficient to avoid the usually required pre-activation of the catalyst in a reducing gas, before it is used in hydrotreating.

The reaction of metal oxides with sulfur is a relatively easy reaction. It is surprising that the less reactive metal sulfates, in particular iron sulfate, can also be reduced by sulfur to metal sulfides at relatively low temperatures.

Reduction of iron sulfate by sulfur formed in the absorption process can be achieved in several ways.

The first is by "once through" regeneration. This is particularly applicable for catalyst beds which are small enough to be effectively heated through the absorber walls.

The sulfur laden catalyst is taken from the absorption process gas line by system of valves and switched in an inert gas line, on site or at another location. The inert gas is passed over the catalyst. The gas may be any suitable inert gas: nitrogen, $CO_2$, methane, *etc.*, as long as it has no oxidizing properties under the employed conditions.

The catalyst is heated up from absorption temperature to *ca.* 105 - 110 °C, to dry the catalyst. The drying takes place at a relatively high space velocity - preferably at > 250 Nm$^3$ gas/m$^3$ catalyst/h, more preferably at > 500 Nm$^3$ gas/m$^3$ catalyst/h - to remove the water effectively. After drying, the space velocity is reduced to preferably less than 100 Nm$^3$ gas/m$^3$ catalyst/h, more preferably less than 50 Nm$^3$ gas/m$^3$ catalyst/h and in particular less than 10 Nm$^3$ gas/m$^3$ catalyst/h. The catalyst temperature is raised from 105-110 °C to a level between 200 °C and 500 °C, preferably 225 °C to 450 °C and more preferably 250 °C to 400 °C. Suitable heating rates vary between 1 and 30 °C/min. The catalyst is kept at this temperature for 1 to 20 hours, preferably 5 to 15 hours and more preferably 5 to 10 hours.

This regeneration procedure has proven very effective, in the sense that it allows for subsequent (at least 25) absorption regeneration cycles without de-activation by progressive sulfation. It has also been found that the catalyst according to the invention does not require re-hydration, such as in EP-A-0 324 091, before the absorber is switched back to the process gas line. The catalyst is immediately hydrated and activated once the process gas is passed over the catalyst bed.

Large catalyst beds and absorbers require heating by the regeneration gas itself, which is more economically done in a closed regeneration loop. The loop consists of the absorber, followed by a water and sulfur condenser - usually integrated in one condenser/heat exchanger - a recirculation blower and a heat exchanger to heat up the gas that is recirculating in the loop. The loop is connected to a bleed valve and an inert gas supply.

As in the "once through" case, the regeneration starts with drying, under comparable conditions. The recirculating gas is heated to a temperature of 100/110 °C by the heater between the recirculation blower and the absorber. The heat required to evaporate the water keeps the catalyst temperature at 80°C to 100 °C. The evaporated water is condensed in the water annex sulfur condenser. The condenser is a heat exchanger which is cooled or heated by a fluid in which no phase transitions occur in its operating temperature range. In the water removal stage, the condenser operates at *ca.* 40 °C. The condensed water is drained from the condenser.

After water removal, signaled by a temperature rise of the catalyst bed, the recirculating inert gas entering the absorber is heated to the desired sulfur evaporation temperature: 200 °C to 500 °C, preferably 225 °C to 450 °C and more preferably 250 °C to 400 °C. The gas hourly space velocity with which the gas is passed over the bed is less crucial than in the "once through" case. An indicative range is 100 to 1000 Nm$^3$ gas/m$^3$ catalyst/h. The optimum value is predominantly determined by the effectiveness of the sulfur condenser and the power required by the recirculation blower. The sulfur condenser is set at a temperature at which, on the one hand, most of the sulfur is condensed, but at which, on the other hand, there is still a significant quantity of sulfur left in the vapor phase to be recirculated to the catalyst, in order to reduce the metal sulfates. Suitable condenser temperatures range from 125 °C to 230 °C, preferably from 150 to 200 °C.

The catalyst is kept at the sulfur evaporation temperature until the pressure rise in the system, due to SO$_2$ evolution as a result of sulfate reduction, drops to zero. Then the condenser is cooled to a temperature just above the sulfur solidifying point and the liquid sulfur is drained. Subsequently, the condenser is cooled to *ca.* 40 °C, to remove the last of the sulfur vapor from the loop. The gas and the catalyst are cooled to absorption temperature while the SO$_2$ is removed through the bleed valve and the system is purged with inert gas or (cleaned) process gas. After this procedure the catalyst is ready for reuse.

Some metal sulfides may again form sulfates with the SO$_2$ remaining in the loop. In such a case, the sulfur is stored in the condenser while the SO$_2$ is bled from the system. After SO$_2$ removal, the condenser is reheated and the sulfur vapor generated is again passed over the catalyst to reduce the remaining sulfate.

By the methods described above it is possible to reduce the metal sulfide completely. However, it is also possible to reduce the metal sulfate partially to a mixture of metal sulfide with excess sulfur, *e.g.* FeS$_2$, and metal sulfate, *e.g.* FeSO$_4$. This can occur, for instance, if sulfur is removed too quickly from the catalyst bed, as happens when sulfur is simply removed by evaporation into a fast flowing sweeping gas. By heating the catalyst to a temperature of 400 °C or more the remaining sulfate is reduced to sulfide by the excess sulfur in the metal sulfide in the starting mixture.

However, the high temperature necessary for this type of regeneration reduction makes this method unattractive, as it requires much more expensive material than necessary for complete reduction with sulfur below 400 °C. The use of one adiabatic absorber in the absorption mode and one in the regeneration mode, is perfectly suitable for removal of H$_2$S up to a level of *ca.* 700 ppmv. Above this value, the oxidation reaction generates too much heat to keep the relative process gas humidity at a sufficiently high level. At less than 80% relative humidity, and particularly at less than 60%, the activity of the catalyst according to the invention rapidly drops to low levels. This means that the catalyst can cope with a temperature rise in the order of 10 to 15°C, after which sulfur compounds, such as H$_2$S are no longer converted, causing significant (H$_2$S) slip in the product gas. If the product gas specification accept such levels there is no problem.

However, this basic property of the system opens the way to cope with relatively high concentrations of sulfur compounds, such as H$_2$S in the feed gas while remaining high removal percentages sulfur compounds, using multistage absorption with inter-cooling without the use of expensive heat exchange equipment. As the process operates within a narrow temperature band of 10 °C to 15 °C the gas can be re-conditioned in a simple inexpensive water wash tower, of the type as described above.

To illustrate the concept, consider a feed gas, made up as described, containing 4000 ppmv $H_2S$ and free oxygen, at an $O_2/H_2S$ ratio of at least 1. The gas, conditioned to a relative gas humidity of 95%, is passed to a double walled absorber having a temperature of 40 °C. Approximately 2500 ppmv $H_2S$ is converted to sulfur. The associated temperature rise of *ca.* 15 °C de-activates the catalyst and automatically prevents temperature runaways which would generate $SO_2$. As its temperature is only 55 °C, the product gas can be cooled to 40 °C and re-humidified to 95% in a simple inexpensive water wash tower, identical to the one in the feed gas make up section. The water temperature is adjusted in such a way that the desired gas outlet temperature is obtained. This is basically the only process control necessary, apart from a check on $H_2S$ breakthrough.

The re-conditioned gas is passed to a second absorber in which the rest of the $H_2S$ is converted to sulfur.

If the first or "lead" absorber gets saturated with sulfur it is switched to the regeneration mode. The second or "lag" absorber becomes the "lead" absorber and the freshly regenerated absorber is switched in to the "lag" position. Such a configuration allows for very high sulfur loads before the catalyst has to be regenerated.

In principle, the operating range of the process can be extended to gases containing vol.% levels of sulfur compounds, such as $H_2S$ by adding water-wash-absorber systems in series. Theoretically, one could process 100 % $H_2S$ gases, as long as sulfur production rate is within reasonable limits for a dry sorption process, *i.e.* less than 10 to 20 tons/day.

For small gas flows it may be economically interesting to reduce the number of absorbers by lowering the $H_2S$ concentration with additional inert gas, or recirculated process product gas.

The catalyst system and process of the present invention can very suitable be applied for the removal of sulfur compounds, such as $H_2S$ from gas sources such as landfill biogases, digester gas, sour natural gas, industrial gases and/or flare gases. The present invention provides an economical and environmentally viable process for sulfur compounds removal, such as $H_2S$, from these and other types of gases.

The clean gases produced by the process of the present invention, as well as by the use of the catalyst system of the present invention are of sufficient quality to be used in prime movers for the production of electricity and/or heat and if required of sufficient quality to be used for the production of gas of natural gas quality.

The invention provides for a high flexibility for the application of desulfurization units. With the invention it is possible to tune a desulfurization unit to the particular application, the site, the location and the needs of the user.

For example, it is possible to install a desulfurization unit with only absorbers (one or more) for small scale applications with low daily sulfur productions rates and supply the user with a full service package. This means that when the absorber is saturated with sulfur, the catalyst or the complete absorber is exchanged and the sulfur-saturated catalyst is regenerated in a regeneration unit at a central location, where catalysts from several desulfurization units are processed. By exchange of the complete absorber, the standardization of absorbers (size, catalyst volume, location and type of valves and connections) gives the opportunity to exchange absorbers between users, hence reducing costs. The choice between one or more absorbers depends of the gas flow to be treated (limitation of gas hourly space velocity) and/or the concentration of sulfur compounds in the gas and the level to which this concentration has to be reduced (limitation in maximum concentration of sulfur compounds to be treated in one step to ensure a complete removal).

For applications with higher daily sulfur production rates an integrated desulfurization unit is installed. In this case the regeneration procedure is performed on site. Often, but not by definition, such desulfurization units consist of three absorbers, one in regeneration mode and two in absorption mode (one in the lag position and one in the lead position). It is clear that when the absorbers are chosen too large the number of regenerations per year will be limited, *i.e.,* the regeneration unit stand idle too often, while the investments in equipment and catalyst are high. Depending on the daily sulfur production rate, the size of the absorbers can be optimized to minimize the standstill of the regeneration unit.

The regeneration of catalyst from sites without integrated regeneration, can also be performed using (the limited) excess regeneration capacity of desulfurization units with integrated regeneration. In this way extra investments in centrally located stand alone regeneration installations is limited, the coverage of central regeneration installations in a certain area is higher, and shorter transportation lines for absorbers (catalyst) from desulfurization units with only absorbers to the central regeneration unit can be realized.

Although users always have the option of installing the type of desulfurization unit they prefer, economically, however, the choice between desulfurization units with central regeneration to units with integrated regeneration lies between daily sulfur production rates of 2 to 40 kg, preferably between 3 and 20 kg and more preferably between 6 and 10 kg.

**Examples**

Example 1

Four different catalysts, all in the shape of extrudates with an outer diameter of 4 mm, and all containing iron oxide on a silica support, were tested in the oxidative removal of $H_2S$. The physical properties of the catalysts are summarized in Table 1, together with the physical property ranges for catalysts according to the description in the present application.

Table 1.

| Summary of properties of the catalysts tested. | | | | | |
|---|---|---|---|---|---|
| Catalyst | BET surface area $m^2/g$ | $N_2$ absorption pore volume $V\text{-}N_{2(<100\,nm)}$ ml/g | Hg intrusion pore volume $V\text{-}Hg_{(>8\,nm)}$ ml/g | $V\text{-}N_2$ / $[V\text{-}N_2+V\text{-}Hg]$ *) | Average pore diameter determined by Hg intrusion, $D_p\text{-}H_g$ nm |
| A | 363 | 0.33 | 0.29 | 0.53 | 180 |
| B | 195 | 0.20 | 0.49 | 0.29 | 844 |
| C | 24 | 0.026 | 0.50 | 0.049 | 142 |
| D | 44 | 0.041 | 0.85 | 0.046 | 88 |

*): Ratio: $V\text{-}N_2(<100\,nm)$ / $(V\text{-}N_2(<100\,nm) + V\text{-}Hg(>8\,nm))$

In each test a tubular quartz reactor (36 mm inner diameter) was loaded with 100 ml catalyst extrudates (100 mm bed height). Seven thermocouples were placed in the central longitudinal axis of the catalyst bed to monitor the temperature profile in the bed. The feed gas inlet temperature was recorded by a thermocouple 10 mm above the catalyst bed.

The reactor was equipped with a heating ribbon, which was uniformly wound around the reactor tube. The ribbon ensured a flat temperature profile in the catalyst bed when an inert gas was passed through the bed. The reactor behaved as an intermediate between an isothermal and adiabatic type of reactor. To reduce heat losses, the reactor was placed in two concentric quartz tubes, with an inner diameter of 80 mm and 100 mm respectively.

To simulate the behavior of repeatedly regenerated and stabilized catalysts, the catalysts were aged in a flow of 1 vol.% $H_2S$ in nitrogen, at a space velocity (GHSV) of 700 $Nm^3$ gas/ $m^3$ catalyst/h, for 16 hours at 350 °C. After aging, the catalysts were cooled to test temperature. The catalysts were not pre-hydrated before testing.

Moist feed gas, containing 2000 ppmv $H_2S$ and 4000 ppmv $O_2$ in nitrogen, was passed through the catalyst bed at an inlet temperature of 40 °C and a GHSV of 1000 $Nm^3$ gas/ $m^3$ catalyst/h. The relative feed gas humidity was 95%. The test results after 20 hours absorption time are summarized in Table 2.

The sulfur selectivity in Table 2, *i.e.,* the tendency to convert $H_2S$ to elemental sulfur instead of $SO_2$, is defined as:

$$100\% \times \frac{\text{ppmv } H_2S_{\text{in feed gas}} - \text{ppmv } H_2S_{\text{in product gas}} - \text{ppmv } SO_{2\text{ in product gas}}}{\text{ppmv } H_2S_{\text{in feed gas}} - \text{ppmv } H_2S_{\text{in product gas}}}$$

Table 2.

| Results of comparative tests after 20 hours absorption time. | | | | |
|---|---|---|---|---|
| Catalyst | Temperature rise in the catalyst bed, °C | $H_2S$ conversion % | $SO_2$ production ppmv | Sulfur selectivity % |
| A | 14 | 60.5 | 769 | 41.1 |
| B | 10 | 79.6 | 48 | 97.3 |
| C | 7 | 100 ($H_2S_{\text{in product}}$ < 1 ppmv) | < detection limit (2 ppmv) | 100 |

Table 2.   (continued)

| Results of comparative tests after 20 hours absorption time. | | | | |
|---|---|---|---|---|
| Catalyst | Temperature rise in the catalyst bed, °C | $H_2S$ conversion % | $SO_2$ production ppmv | Sulfur selectivity % |
| D | 6 | 94.2 | < detection limit (2 ppmv) | 100 |

The effects of catalyst composition and structure are slightly masked by the type of reactor used in the tests. The heat losses through the reactor wall reduce the temperature effects of the $H_2S$ oxidation, on, particularly, the state of hydration of the catalyst and its sulfur selectivity. Nevertheless, the results clearly show the relevant differences between the four catalysts.

The catalysts according to the invention (catalyst C and D) show clearly improved results when compared with the reference catalysts (A and B).

The catalysts according to the invention dissipate the reaction heat so well, that a high sulfur selectivity is maintained even under relatively severe reaction conditions, *i.e.* in feed gases with high $H_2S$ and $O_2$ levels. This is illustrated in the following Example.

Example 2

Two 100 ml samples of catalyst C from Example 1 were tested for oxidative $H_2S$ absorption in a reactor as described in Example 1 and pre-aged by the method also described in Example 1.

Two runs (Run 1 and Run 2) were carried out at different conditions, given in Table 3.

Table 3.

| Conditions used in Run 1 and Run 2 | | |
|---|---|---|
| | Run 1 | Run 2 |
| Feed gas: | | |
| Temperature /[°C] | 40 | 40 |
| relative humidity / [%] | 95 | 95 |
| $H_2S$ / [ppmv] | 2000 | 6000 |
| $O_2$ / [ppmv] | 4000 | 12000 |
| $N_2$ / [ppmv] | Balance | balance |
| GHSV / [$Nm^3$ gas/ $m^3$ catalyst/h] | 500 | 500 |

Table 4 shows the results of these runs with different feed gases after 20 hours absorption time.

Table 4.

| Tests with catalyst C. Results after 20 hours absorption time. | | | |
|---|---|---|---|
| Test conditions | Temperature rise in the catalyst bed, °C | $H_2S$ conversion, % | Sulfur selectivity, % |
| Run 1 | 5 | 100 | 100 |
| Run 2 | 9 | 96 | 100 |

Example 3

This example demonstrates the effectiveness of sulfur as a reducing agent in the regeneration of the catalyst.

A 100 ml sample of catalyst C was tested in successive absorption/regeneration cycles in a reactor as described in Example 1 and pre-aged by the method also described in Example 1.

The absorption behavior was tested under the same conditions as Run 1 of Example 2 (see Table 3, above).

Two different regeneration procedures were used:

**Procedure I:**

- switch from feed gas to nitrogen, GHSV = 1000 Nm$^3$ gas/ m$^3$ catalyst/h,
- heating of the catalyst bed in the nitrogen stream up to 320 °C, at a rate of 5 ° C/min,
- isothermal treatment in the nitrogen stream at 320 °C for 10 hours, to evaporate and remove the absorbed sulfur as quickly as possible,
- cooling in the nitrogen stream to 40 °C,
- switch to absorption feed gas.

**Procedure II:**

- switch from feed gas to nitrogen,
- a 1 hour purge at 40°C with nitrogen at a GHSV of 1000 Nm$^3$ gas/ m$^3$ catalyst/h,
- reduction of the nitrogen flow to a GHSV of only 3 Nm$^3$ gas/ m$^3$ catalyst/h, to keep the melting and evaporating sulfur (see following regeneration steps) in close contact with the catalytic material as long as possible,
- heating of the catalyst bed in the nitrogen stream up to 320 °C, at a rate of 5°C/min,
- isothermal treatment in the nitrogen stream at 320 °C for 10 hours,
- increase of the nitrogen flow to a GHSV of 1000 Nm$^3$ gas/ m$^3$ catalyst/h
- continuation of the isothermal treatment in the nitrogen stream at 320 °C for 2 hours, to remove the remaining sulfur,
- cooling in the nitrogen stream to 40 °C,
- switch to absorption feed gas.

The results of the absorption tests after a certain number of absorption/regeneration cycles and different regeneration procedures are summarized in Table 4.

Table 4.

| Results of absorption/regeneration experiments. | | |
|---|---|---|
| | Time before > 3 ppmv H$_2$S in the product gas. Hours | Remarks |
| Absorption #1 | 69 | Absorption #1 and the following absorption runs continued up to a sulfur loading of c. 125 g/l catalyst before regeneration |
| Absorption #6 after 5 complete absorption regeneration cycles using regeneration procedure I (quick removal of absorbed sulfur from the catalyst bed at 320°C) | 43 | De-activation due to formation of catalytically inactive iron sulfate |
| Absorption # 7 after using procedure II in regeneration #6 (sulfate reduction with liquid sulfur/ sulfur vapor for 10 hours at 320°C) | 63 | |
| Absorption # 8 after using procedure II in regeneration run #6 and #7 (sulfate reduction with absorbed sulfur for 10 hours at 320 °C) | 68 | The catalyst kept up a stable performance over at least 17 following cycles using regeneration procedure II |

**Claims**

1. Supported catalyst system for the removal of sulfur compounds comprising a metal compound on a support material, wherein in said catalyst system the sum of the pore volume present in micro-pores and in mesopores is less than 0.20 ml per gram of catalyst, and wherein the pore volume V-Hg, as measured by mercury intrusion porosimetry, is at least 0.30 ml/g.

2. Catalyst system according to claim 1, wherein V-Hg is more than 0.40 ml/g, preferably more than 0.45 ml/g.

3. Catalyst system according to any of the previous claims, wherein the sum of the pore volume present in micropores and in mesopores is less than 0.15 ml/g, preferably less than 0.10 ml/g.

4. Catalyst system according to any of the previous claims, wherein said metal compound is a metal oxide, metal sulfide and/or metal oxysulfide,wherein said metal is selected from the group consisting of Ni, Co, Fe, Cu, Ag, Mn, Mo, Cr, Ti, W, V, precious metals, and combinations thereof.

5. Catalyst system according to any of the previous claims, wherein said support material comprises a material selected from the group consisting of natural or synthetic aluminas, natural or synthetic silica-aluminas, silica, titania, zirconia, carbides, and combinations thereof.

6. Catalyst system according to any of the previous claims, which comprises iron oxide on silica.

7. Catalyst system according to any of the previous claims, which has an average pore diameter, as measured by mercury intrusion, of at least 80 nm, preferably more than 100 nm, most preferably more than 120 nm.

8. Catalyst system according to any of the previous claims, in which the fraction $V\text{-}N_2/(V\text{-}Hg + V\text{-}N_2)$ is less that 0.30, preferably less than 0.20 and more preferably less than 0.15.

9. Catalyst system according to any of the previous claims, wherein the metal content is 0.1 % to 20 %, preferably 2 % to 10 % by weight, based on the weight of the catalyst.

10. Catalyst system according to any of the previous claims, wherein the specific surface area, as determined by the BET multipoint nitrogen absorption method, is within the range of 2 to 200 $m^2$/g, preferably 5 to 100 $m^2$/g, more preferably 10 to 60 $m^2$/g.

11. Use of a catalyst system according to any of the previous claims in a process for desulfurization of gases.

12. Use according to claim 11, wherein said gases contain $H_2S$.

13. Use according to claim 11 or 12, wherein said gases are contacted with said catalyst system at temperatures between 0 °C and 180 °C, preferable between 10 °C and 100 °C, more preferable between 20 °C and 80 °C.

14. Use of a catalyst system according to claim 11-13 wherein said gases have at relative humidities of 1% to 100%, preferably between 40 and 99%, more preferably between 60 % and 97 %.

15. Dry-bed sorption process for removal of sulfur compounds from a gas stream, wherein

a) the gases, in the presence of oxygen and water vapor, and optionally diluted with sulfur free gas, are passed over one or more beds of a catalyst system comprising a porous support material which catalyst system catalyzes the oxidation of said sulfur compounds to elemental sulfur, the elemental sulfur formed being retained in said porous support material in solid form; and subsequently
b) the charged catalyst system is regenerated by removal of the elemental sulfur, using said sulfur as reducing agent to convert metal sulfates to catalytically active metal sulfides and/or metal oxy sulfides.

16. Process according to claim 15, wherein said catalyst system comprises of a catalyst according to claims 1 to 10.

17. Process according to claim 15 or 16, wherein said sulfur compounds comprise hydrogen sulfide.

18. Process according to claim 15-17, wherein said sulfur compounds are present in said gas stream in ppmv to vol. % levels.

19. Process according to claim 15-18, wherein said charged catalyst system is regenerated at a temperature of 200°C - 500°C, preferably at a temperature of 225°C - 450 °C, more preferably at a temperature of between 250 °C and 400 °C.

20. Process according to claim 15-19, wherein said gas stream is fed through an apparatus comprising a gas make up section for adjusting relative humidity.

21. Process according to claim 15-20, wherein said gas stream is fed through an apparatus comprising at least two adiabatic absorbers filled with fixed beds of said catalyst system, wherein one or more absorbers are in the absorption stage, while one or more is in the regeneration stage.

22. Process according to claim 15-21, wherein a gas containing molecular oxygen is admixed to said gas stream.

23. Process according to claim 22, wherein the molar $O_2/H_2S$ ratio in the resulting mixture is from 0.01 to 20, preferably from 0.5 to 10, most preferably from 1 to 5.

24. Process according to claim 15-23, wherein step a) and step b) are carried out at different geographical locations.

25. Process according to claim 15-24, wherein in step a) at least two absorbers are used, between which the relative humidity of the gas stream is adjusted.

26. Process according to claim 15-25, further comprising steps to remove the excess oxygen from the product gas.

27. Use of sulfur generated in the removal stage of sulfur compounds as a reducing agent for the conversion and regeneration of catalytically inactive metal sulfates to active metal sulfides.

**European Patent Office**

## EUROPEAN SEARCH REPORT

Application Number

EP 03 07 5345

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 409 353 A (VEG-GASINSTITUUT N.V.) 23 January 1991 (1991-01-23) * claims 1-10; examples 1A,1B * | 1-12 | B01D53/86 B01J23/745 B01J35/10 C01B17/04 |
| A | EP 0 242 920 A (VEG-GASINSTITUUT N.V.) 28 October 1987 (1987-10-28) * page 8, line 17 - page 12, line 16; examples I,II, * | 1-14 | |
| A | US 6 207 127 B1 (GEUS ET AL) 27 March 2001 (2001-03-27) * the whole document * | 1-14 | |
| D,A | US 6 083 471 A (PHILIPPE ET AL) 4 July 2000 (2000-07-04) * column 1, line 1 - column 1, line 11; example 1 * | 1,11,12 | |
| A | US 4 454 026 A (HENSLEY JR. ET AL) 12 June 1984 (1984-06-12) * column 6, line 30 - column 7, line 20; example 1 * | 1 | TECHNICAL FIELDS SEARCHED (Int.Cl.7) |
| A | DE 100 54 457 A (SÜD-CHEMIE AG) 8 May 2002 (2002-05-08) * page 2, paragraph 12 - page 4, paragraph 41; example 1 * | 1 | B01D B01J C01B |
| X | EP 0 324 091 A (VEG-GASINSTITUUT) 19 July 1989 (1989-07-19)  * column 3, line 54 - column 10, line 5 * | 15, 17-19, 22-24 | |
| X | US 5 262 135 A (LELL ET AL) 16 November 1993 (1993-11-16)  * column 1, line 65 - column 3, line 9 * | 15, 17-19, 22-24 | |

-/--

The present search report has been drawn up for all claims

| Place of search | Date of completion of the search | Examiner |
|---|---|---|
| THE HAGUE | 8 October 2003 | Doolan, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent**

**Office**

## EUROPEAN SEARCH REPORT

Application Number

EP 03 07 5345

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 256 384 A (ROLKE ET AL) 26 October 1993 (1993-10-26)<br><br>* column 1, line 58 - column 3, line 58 * | 15, 17-19, 21-24 | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 8 October 2003 | Doolan, G |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

European Patent

Office

Application Number

EP 03 07 5345

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

**European Patent Office**

**LACK OF UNITY OF INVENTION SHEET B**

Application Number

EP 03 07 5345

The Search Division considers that the present European patent application does not comply with the requirements of unity of invention and relates to several inventions or groups of inventions, namely:

1. Claims: 1-14

   supported catalyst system and use of the supported catalyst system

2. Claims: 15-27

   dry bed sorption process for removal of sulfur compounds from a gas stream, and use of sulfur... for the regeneration of catalytically inactive metal sulfates to active metal sulfites

**EP 1 447 124 A1**

## ANNEX TO THE EUROPEAN SEARCH REPORT
## ON EUROPEAN PATENT APPLICATION NO.

EP 03 07 5345

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2003

| Patent document cited in search report | | | Publication date | Patent family member(s) | | | Publication date |
|---|---|---|---|---|---|---|---|
| EP 409353 | A | | 23-01-1991 | NL | 8901893 | A | 18-02-1991 |
| | | | | NL | 8902690 | A | 16-05-1991 |
| | | | | AT | 128643 | T | 15-10-1995 |
| | | | | AU | 628195 | B2 | 10-09-1992 |
| | | | | AU | 5911490 | A | 24-01-1991 |
| | | | | BR | 9003526 | A | 27-08-1991 |
| | | | | CA | 2021527 | A1 | 22-01-1991 |
| | | | | CN | 1049320 | A ,B | 20-02-1991 |
| | | | | CN | 1153136 | A ,B | 02-07-1997 |
| | | | | CZ | 9003630 | A3 | 17-02-1999 |
| | | | | DE | 69022790 | D1 | 09-11-1995 |
| | | | | DE | 69022790 | T2 | 14-03-1996 |
| | | | | DK | 409353 | T3 | 05-02-1996 |
| | | | | EP | 0409353 | A1 | 23-01-1991 |
| | | | | ES | 2080103 | T3 | 01-02-1996 |
| | | | | FI | 102250 | B1 | 13-11-1998 |
| | | | | GR | 3017655 | T3 | 31-01-1996 |
| | | | | HU | 54311 | A2 | 28-02-1991 |
| | | | | JP | 3037976 | B2 | 08-05-2000 |
| | | | | JP | 3150210 | A | 26-06-1991 |
| | | | | MX | 171189 | B | 06-10-1993 |
| | | | | NO | 903255 | A | 22-01-1991 |
| | | | | PL | 286150 | A1 | 22-04-1991 |
| | | | | PT | 94783 | A ,B | 20-03-1991 |
| | | | | SG | 49116 | A1 | 18-05-1998 |
| | | | | SK | 363090 | A3 | 11-07-2000 |
| | | | | RU | 2070089 | C1 | 10-12-1996 |
| | | | | US | 5352422 | A | 04-10-1994 |
| | | | | US | 5286697 | A | 15-02-1994 |
| | | | | ZA | 9005622 | A | 26-06-1991 |
| EP 242920 | A | | 28-10-1987 | NL | 8600959 | A | 16-11-1987 |
| | | | | AT | 55555 | T | 15-09-1990 |
| | | | | AU | 583983 | B2 | 11-05-1989 |
| | | | | AU | 7149887 | A | 22-10-1987 |
| | | | | BR | 8701847 | A | 02-02-1988 |
| | | | | CA | 1300117 | C | 05-05-1992 |
| | | | | CN | 87103687 | A ,B | 09-03-1988 |
| | | | | DE | 3764298 | D1 | 20-09-1990 |
| | | | | DK | 182987 | A | 17-10-1987 |
| | | | | EP | 0242920 | A1 | 28-10-1987 |
| | | | | FI | 871613 | A ,B, | 17-10-1987 |
| | | | | GR | 3000726 | T3 | 10-10-1991 |
| | | | | IN | 172206 | A1 | 01-05-1993 |
| | | | | IN | 169394 | A1 | 12-10-1991 |
| | | | | JP | 2525805 | B2 | 21-08-1996 |

EPO FORM P0459

For more details about this annex : see Official Journal of the European Patent Office, No. 12/82

20

## ANNEX TO THE EUROPEAN SEARCH REPORT
## ON EUROPEAN PATENT APPLICATION NO.

EP 03 07 5345

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2003

| Patent document cited in search report | | Publication date | Patent family member(s) | | Publication date |
|---|---|---|---|---|---|
| EP 242920 | A | | JP | 63028450 A | 06-02-1988 |
| | | | MX | 168319 B | 18-05-1993 |
| | | | NO | 871560 A ,B, | 19-10-1987 |
| | | | PT | 84676 A ,B | 01-05-1987 |
| | | | SU | 1833200 A3 | 07-08-1993 |
| | | | US | 4818740 A | 04-04-1989 |
| | | | US | 5037629 A | 06-08-1991 |
| | | | YU | 68287 A1 | 31-12-1988 |
| | | | YU | 154988 A1 | 28-02-1990 |
| US 6207127 | B1 | 27-03-2001 | NL | 1002524 C2 | 05-09-1997 |
| | | | AT | 194970 T | 15-08-2000 |
| | | | AU | 2236497 A | 22-09-1997 |
| | | | CA | 2248129 A1 | 12-09-1997 |
| | | | CN | 1212668 A ,B | 31-03-1999 |
| | | | CZ | 9802799 A3 | 17-03-1999 |
| | | | DE | 69702655 D1 | 31-08-2000 |
| | | | DE | 69702655 T2 | 12-04-2001 |
| | | | EA | 1069 B1 | 30-10-2000 |
| | | | EP | 0885168 A1 | 23-12-1998 |
| | | | ES | 2150221 T3 | 16-11-2000 |
| | | | GR | 3034330 T3 | 29-12-2000 |
| | | | WO | 9732813 A1 | 12-09-1997 |
| | | | PL | 328717 A1 | 15-02-1999 |
| | | | PT | 885168 T | 29-12-2000 |
| | | | SK | 122498 A3 | 11-06-1999 |
| | | | US | 2001008619 A1 | 19-07-2001 |
| | | | ZA | 9701791 A | 04-09-1997 |
| US 6083471 | A | 04-07-2000 | WO | 9719019 A1 | 29-05-1997 |
| | | | AT | 232507 T | 15-02-2003 |
| | | | DE | 69529625 D1 | 20-03-2003 |
| | | | DK | 804380 T3 | 02-06-2003 |
| | | | EP | 0804380 A1 | 05-11-1997 |
| | | | FR | 2727101 A1 | 24-05-1996 |
| | | | JP | 11500403 T | 12-01-1999 |
| | | | NO | 973278 A | 15-07-1997 |
| | | | RU | 2142405 C1 | 10-12-1999 |
| US 4454026 | A | 12-06-1984 | AU | 547464 B2 | 24-10-1985 |
| | | | AU | 8429282 A | 23-12-1982 |
| | | | CA | 1187468 A1 | 21-05-1985 |
| | | | DE | 3267561 D1 | 02-01-1986 |
| | | | EP | 0067708 A2 | 22-12-1982 |
| | | | JP | 1747588 C | 25-03-1993 |
| | | | JP | 4031737 B | 27-05-1992 |

EPO FORM P0459

For more details about this annex : see Official Journal of the European Patent Office, No. 12/82

**EP 1 447 124 A1**

## ANNEX TO THE EUROPEAN SEARCH REPORT
## ON EUROPEAN PATENT APPLICATION NO.

EP 03 07 5345

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2003

| Patent document cited in search report | | Publication date | Patent family member(s) | | Publication date |
|---|---|---|---|---|---|
| US 4454026 | A | | JP | 57209640 A | 23-12-1982 |
| | | | US | 4549957 A | 29-10-1985 |
| DE 10054457 | A | 08-05-2002 | DE | 10054457 A1 | 08-05-2002 |
| | | | AU | 2953002 A | 21-05-2002 |
| | | | WO | 0238267 A2 | 16-05-2002 |
| | | | EP | 1337328 A2 | 27-08-2003 |
| | | | NO | 20031992 A | 02-06-2003 |
| EP 324091 | A | 19-07-1989 | DE | 3740439 A1 | 08-06-1989 |
| | | | AT | 101806 T | 15-03-1994 |
| | | | AU | 2631488 A | 01-06-1989 |
| | | | CA | 1335151 C | 11-04-1995 |
| | | | DE | 3887978 D1 | 31-03-1994 |
| | | | DE | 3887978 T2 | 14-07-1994 |
| | | | DK | 659288 A | 29-05-1989 |
| | | | EP | 0324091 A2 | 19-07-1989 |
| | | | ES | 2051289 T3 | 16-06-1994 |
| | | | NO | 885271 A ,B, | 29-05-1989 |
| | | | SU | 1722210 A3 | 23-03-1992 |
| | | | US | 5152970 A | 06-10-1992 |
| US 5262135 | A | 16-11-1993 | DE | 4109891 A1 | 01-10-1992 |
| | | | DE | 59206149 D1 | 05-06-1996 |
| | | | EP | 0506161 A1 | 30-09-1992 |
| | | | ES | 2087428 T3 | 16-07-1996 |
| | | | RU | 2070538 C1 | 20-12-1996 |
| US 5256384 | A | 26-10-1993 | DE | 4109892 A1 | 01-10-1992 |
| | | | DE | 59202650 D1 | 03-08-1995 |
| | | | EP | 0506160 A1 | 30-09-1992 |
| | | | ES | 2075588 T3 | 01-10-1995 |
| | | | RU | 2070086 C1 | 10-12-1996 |

EPO FORM P0459

For more details about this annex : see Official Journal of the European Patent Office, No. 12/82

22